# EUROPEAN PATENT SPECIFICATION

(11) **EP 2 605 582 B1**
(45) Date of publication and mention of the grant of the patent: **19.04.2017**
(21) Application number: 11852591.4
(22) Date of filing: 16.12.2011
(51) Int. Cl.: H04W 28/20

(54) **PROCESSING METHOD, DEVICE AND SYSTEM FOR BANDWIDTH CONTROL**
VERARBEITUNGSVERFAHREN, -VORRICHTUNG UND -SYSTEM FÜR BANDBREITENSTEUERUNG
PROCÉDÉ, DISPOSITIF ET SYSTÈME DE TRAITEMENT PERMETTANT UN CONTRÔLE DE LA BANDE PASSANTE

(30) Priority: 31.12.2010 CN 201010624622
(43) Date of publication of application: 19.06.2013
(73) Proprietor: Huawei Technologies Co., Ltd., Longgang District Shenzhen, Guangdong 518129 (CN)
(72) Inventor: DUAN, Haifeng, Guangdong 518129 (CN)
(74) Representative: Epping - Hermann - Fischer
(86) International application number: PCT/CN2011/084108
(87) International publication number: WO 2012/089036

(56) References cited:
- WO-A1-2009/099076
- WO-A2-02/052869
- CN-A- 101 772 083
- CN-A- 102 143 534
- US-A1- 2004 033 806
- US-A1- 2010 202 415
- "3rd Generation Partnership Project; Technical Specification Group Services and System Aspects; Policy and charging control architecture (Release 11)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.0.0, 17 December 2010 (2010-12-17) , pages 1-137, XP050462083, [retrieved on 2010-12-17]

## Description

### FIELD OF THE INVENTION

Embodiments of the present invention relate to the field of mobile communications technologies, and in particular, to a processing method, device, and system for bandwidth control.

### BACKGROUND OF THE INVENTION

As the third generation (The Third Generation, hereinafter referred to as 3Gt) mobile communications technologies become more mature, people are more likely to use data services on the move.

Generally, frequency resources in a cell where a mobile terminal is located are limited. Bandwidth control is performed for data services of each user in a mobile cell with high-frequency use of data services or within the range of a certain mobile cell, so as to ensure that all users in the mobile cell are capable of using basic data services concurrently. This can effectively solve the problem that in a same mobile cell, for a part of users, comparatively higher bandwidth is used for data services; for another part of users, however, even basic data service bandwidth cannot be guaranteed. In the prior art, a bandwidth control policy is generally configured on a core network device, for example, a network access server (Network Access Server, hereinafter referred to as NAS) device, or on a service network gateway (hereinafter referred to as Gateway) device, allowing all mobile cells to be configured with a same bandwidth control policy.

WO 02/052869 A2 discloses a resource allocation system for a network, the system comprising a traffic shaper operative to decompose a network stream into plurality of flows, each flow representing a service or application on a network down-link, and shape network traffic by allocating a different bandwidth and the delay to each flow.

### SUMMARY OF THE INVENTION

Embodiments of the present invention provide a processing method, and device for bandwidth control, so as to address the defect of comparatively lower processing efficiency of bandwidth control in the prior art.

An embodiment of the present invention provides a processing method for bandwidth control, including:
acquiring, by a Policy and Charging Rules Function server, a set of configuration parameters comprising a cell identifier of a cell where a mobile terminal is located from a request for configuring a bandwidth control policy sent by a network access server or a service network gateway to the Policy and Charging Rules Function server when detecting that the mobile terminal is activated or the mobile terminal is performing a cell handover; and
dynamically configuring, by the Policy and Charging Rules Function server, a bandwidth control policy for the mobile terminal according to the set of configuration parameters and a set of bandwidth control policies preconfigured by an operator, wherein the set of bandwidth control policies comprises a bandwidth control policy corresponding to the cell identifier; the configuring process further comprising:
   sending, by the Policy and Charging Rules Function server, the bandwidth control policy to the network access server or the service network gateway;
   sending, by the network access server or the service network gateway, in real time, when determining that the configured bandwidth control policy comprises a first bandwidth control sub-policy corresponding to an air interface bandwidth control identifier, the first bandwidth control sub-policy to a radio network controller, allowing the radio network controller to implement the first bandwidth control sub-policy; and implementing, by the network access server or the service network gateway, in real time, when determining that a second bandwidth control sub-policy, which needs to be locally implemented, exists in the bandwidth control policy, the second bandwidth control sub-policy in the bandwidth control policy.

An embodiment of the present invention provides a mobile communications network device, including: an acquiring module, adapted to acquire, when detecting that a mobile terminal is activated or a mobile terminal is performing a cell handover, a set of configuration parameters comprising a cell identifier of a cell where the mobile terminal is located; and
a configuring module, adapted to dynamically configure a bandwidth control policy for the mobile terminal according to the set of configuration parameters and a set of bandwidth control policies preconfigured by an operator, wherein the set of bandwidth control policies comprises a bandwidth control policy corresponding to the cell identifier;
wherein the set of configuration parameters acquired by the acquiring module further comprises integrated dimension information corresponding to the mobile terminal; and the integrated dimension information comprises one or more of the following: type of a service used by the mobile terminal, user type of the mobile terminal, user priority of the mobile terminal, access point of the mobile terminal, bearer type of the mobile terminal, and time when the mobile terminal sends a data service activation request;
wherein the mobile communications network device is a network access server or a service network gateway; the acquiring module is specifically adapted to acquire, from a data service activation request or a data service activation update request sent by a radio network controller, the set of configuration parameters comprising the cell identifier, and the mobile communications network device further comprises:
a second sending module, adapted to send, when determining that the bandwidth control policy comprises a first bandwidth control sub-policy corresponding to an air interface bandwidth control identifier, the first bandwidth control sub-policy to the radio network controller, allowing the radio network controller to implement the first bandwidth control sub-policy; and
an implementing module, adapted to implement, when determining that a second bandwidth control sub-policy, which needs to be locally implemented, exists in the bandwidth control policy, the second bandwidth control sub-policy in the bandwidth control policy.

According to the processing method, and device for bandwidth control in the embodiments of the present invention, the mobile communications network device acquires, when detecting that the mobile terminal is activated or the mobile terminal is performing the cell handover, the set of configuration parameters including the cell identifier of the cell where the mobile terminal is located, and dynamically configures the bandwidth control policy for the mobile terminal according to the set of configuration parameters and the set of bandwidth control policies preconfigured by the operator. According to the technical solutions in the embodiments of the present invention, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art can derive other drawings from these accompanying drawings without creative efforts.
FIG. 1 is a flow chart of a processing method for bandwidth control according to a first embodiment of the present invention;
FIG. 2 is a flow chart of a processing method for bandwidth control according to a second embodiment of the present invention;
FIG. 3(shown by FIG. 3A and FIG. 3B) is a flow chart of a processing method for bandwidth control according to a third embodiment of the present invention;
FIG. 4 is a signaling diagram of a processing method for bandwidth control according to a fourth embodiment of the present invention;
FIG. 5 is a signaling diagram of a processing method for bandwidth control according to a fifth embodiment of the present invention;
FIG. 6 is a signaling diagram of a processing method for bandwidth control according to a sixth embodiment of the present invention;
FIG. 7 is a signaling diagram of a processing method for bandwidth control according to a seventh embodiment of the present invention;
FIG. 8 is a schematic structural diagram of a mobile communications network device according to an eighth embodiment of the present invention;
FIG. 9 is a schematic structural diagram of a mobile communications network device according to a ninth embodiment of the present invention;
FIG. 10 is a schematic structural diagram of a mobile communications network device according to a tenth embodiment of the present invention;
FIG. 11 is a schematic structural diagram of a bandwidth control system according to an eleventh embodiment of the present invention;
FIG. 12 is a schematic structural diagram of a processing system for bandwidth control according to a twelfth embodiment of the present invention;
FIG. 13 is a schematic structural diagram of a processing system for bandwidth control according to a thirteenth embodiment of the present invention;
FIG. 14 is a schematic structural diagram of a processing system for bandwidth control according to a fourteenth embodiment of the present invention; and
FIG. 15 is a schematic structural diagram of a processing system for bandwidth control according to a fifteenth embodiment of the present invention.

### DETAILED DESCRIPTION OF THE EMBODIMENTS

To make the objectives, technical solutions, and advantages of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

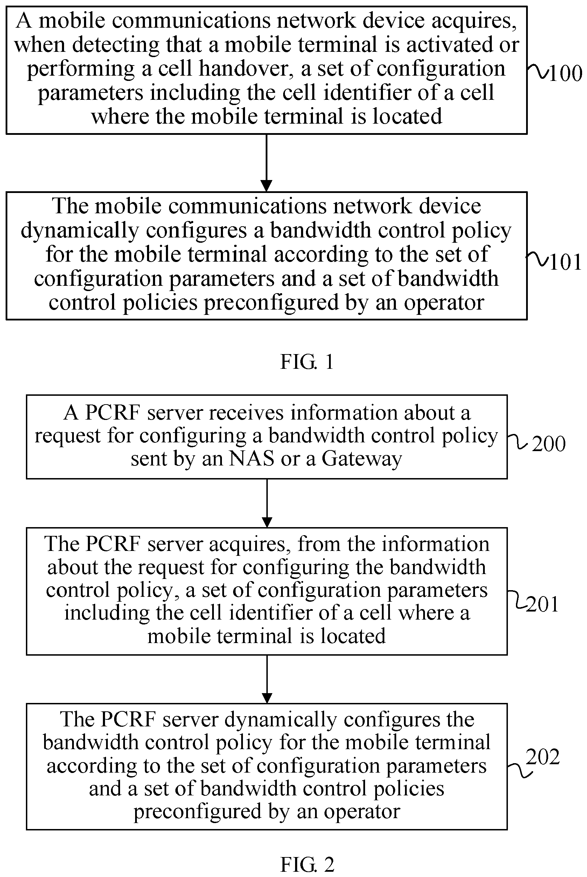

FIG. 1 is a flow chart of a processing method for bandwidth control according to a first embodiment of the present invention. As shown in FIG. 1, the execution body of the processing method for bandwidth control in this embodiment is a mobile communications network device. The processing method for bandwidth control in this embodiment may specifically include the following steps:
Step 100: The mobile communications network device acquires, when detecting that a mobile terminal is activated or the mobile terminal is performing a cell handover, a set of configuration parameters including a cell identifier of a cell where the mobile terminal is located.

The mobile communications network device may be a network access server NAS, a service network gateway, or a Policy and Charging Rules Function PCRF server, and the specific implementation process thereof may be adjusted according to network architecture. Specifically, the mobile communications network device is capable of acquiring, when detecting that the mobile terminal is activated or the mobile terminal is performing the cell handover, a set of configuration parameters corresponding to the mobile terminal, where the set of configuration parameters includes at least the cell identifier of the cell where the mobile terminal is located.

Step 101: The mobile communications network device dynamically configures a bandwidth control policy for the mobile terminal according to the set of configuration parameters and a set of bandwidth control policies preconfigured by an operator,
where the set of bandwidth control policies preconfigured by the operator includes a bandwidth control policy corresponding to the cell identifier.

Specifically, the set of bandwidth control policies preconfigured by the operator is a collection of multiple bandwidth control policies preconfigured by the operator on the mobile communications network device according to each cell identifier. For example, the set of bandwidth control policies may include different bandwidth control policies targeted at different cells (at different geographical locations). For example, for a densely populated cell, bandwidth configured for each mobile terminal in the cell may be properly decreased; and for a sparsely populated cell, bandwidth configured for each mobile terminal in the cell may be properly increased.

In this embodiment, the mobile communications network device may acquire, from the set of bandwidth control policies preconfigured by the operator, the bandwidth control policy corresponding to the cell identifier of the cell where the mobile terminal is located, and use the acquired bandwidth control policy as the bandwidth control policy configured for the mobile terminal.

Furthermore, the set of configuration parameters in this embodiment may also include integrated dimension information corresponding to the mobile terminal, where the integrated dimension information may include one or more of the following: a type of a service used by the mobile terminal, a user type of the mobile terminal, a user priority of the mobile terminal, an access point name (Access Point Name, hereinafter referred to as APN) of the mobile terminal, a bearer type (Bearer Type) of the mobile terminal, time when the mobile terminal is activated, and time when the mobile terminal is performing the cell handover. For example, the type of the service used by the mobile terminal may be an HTTP browse, voice (voice), stream, or P2P service. For another example, the user type provided by a mobile operator may be GoTone, Easy-own, or M-Zone. Users may be classified into VIP users and common users according to priorities, multiple levels of user priorities may be set according to actual requirements, and so on. The APN indicates the access mode that the mobile terminal uses to access a network, the bearer type of the mobile terminal, and so on. For details, reference may be made to the prior art. For example, according to the actual requirements, the integrated dimension information may further include other parameters, which will not be further listed herein.

Accordingly, the set of bandwidth control policies preconfigured by the operator may specifically include a set of bandwidth control policies preconfigured according to each cell identifier and one or more of configuration parameters in the integrated dimension information. One or a combination of the following bandwidth control policies is specifically included.

For example, various bandwidth control policies may be preconfigured for the mobile terminal according to each cell identifier and the service type of the mobile terminal. For example, comparatively higher bandwidth is configured for a streaming media service or a P2P service, and comparatively lower bandwidth is configured for a voice service.

Alternatively, service-unrelated bandwidth control policies configured according to each cell identifier and configuration parameters other than the service type in the integrated dimension information may also be included. In a service-unrelated bandwidth control policy, information, for example a network element that implements the policy, also needs to be determined. Bandwidth control sub-policies unrelated to the service type may also be called system-level bandwidth control polices. The system-level bandwidth control policies may be implemented on an RNC, an NAS, or a Gateway. In practical applications, a service-unrelated bandwidth control policy is preferably executed on the RNC. This can effectively save bandwidth resources on the NAS. A preconfigured bandwidth control policy that needs to be executed by the RNC carries an air interface bandwidth control identifier, indicating that this bandwidth control policy needs to be implemented by the RNC. A service-related bandwidth control sub-policy must be implemented on the NAS or Gateway.

For another example, when the mobile terminal has a comparatively higher user priority, a bandwidth control policy with comparatively larger bandwidth may be configured according to the cell identifier and user priority.

For another example, the set of preconfigured bandwidth control policies may also include bandwidth control policies configured according to cell identifiers and time periods. For example, each day may be divided into multiple time periods, for example, from 9:00 am to 9:00 pm in the day as busy time, and other time as idle time. In this way, for a cell corresponding to a same cell identifier, bandwidth in the bandwidth control policy configured for each mobile terminal in the cell at busy time may be properly decreased, and bandwidth in the bandwidth control policy configured for each mobile terminal in the cell at idle time may be properly increased, thereby ensuring balanced bandwidth for all users in the cell; meanwhile, at idle time, bandwidth in the bandwidth control policy may be properly increased for each mobile terminal in the cell, thereby making effective use of idle bandwidth resources.

In practical applications, the cell identifier and multiple configuration parameters may be considered concurrently for configuring a bandwidth control policy for the mobile terminal. For example, various bandwidth control policies may be synthetically determined for the mobile terminal according to each parameter in the integrated dimension information corresponding to the mobile terminal and the cell identifier of the cell where the mobile terminal is located.

It should be noted that, the set of bandwidth control policies preconfigured by the operator may further include multiple bandwidth control policies preconfigured according to the cell identifier, one or more configuration parameters in the integrated dimension information, and an identifier of the mobile terminal. Therefore, the set of configuration parameters may also include the identifier of the mobile terminal.

According to the processing method for bandwidth control in this embodiment, the mobile communications network device acquires, when detecting that the mobile terminal is activated or the mobile terminal is performing the cell handover, the set of configuration parameters including the cell identifier of the cell where the mobile terminal is located, and dynamically configures the bandwidth control policy for the mobile terminal according to the set of configuration parameters and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

It should be noted that the mobile communications network device in this embodiment may specifically be an NAS or a Gateway. Step 100 may specifically be as follows: The NAS or Gateway acquires, from a data service activation request (when the mobile terminal is activated) or a data service activation update request (when the mobile terminal is performing the cell handover) sent by an RNC, the cell identifier, and obtains the set of configuration parameters including the cell identifier.

FIG. 2 is a flow chart of a processing method for bandwidth control according to a second embodiment of the present invention. As shown in FIG. 2, the processing method for bandwidth control in this embodiment may specifically include the following steps:
Step 200: A Policy and Charging Rules Function (hereinafter referred to as PCRF) server receives information about a request for configuring a bandwidth control policy, where the information is sent by an NAS or a Gateway.
Step 201: The PCRF server acquires, from the information about the request for configuring the bandwidth control policy, a set of configuration parameters including a cell identifier of a cell where a mobile terminal is located.
Step 202: The PCRF server dynamically configures the bandwidth control policy for the mobile terminal according to the set of configuration parameters and a set of bandwidth control policies preconfigured by an operator.

In this embodiment, the set of bandwidth control policies preconfigured by the operator is configured in the PCRF server. In this embodiment, the NAS or Gateway may send the information about the request for configuring the bandwidth control policy to the PCRF server, where the information carries the set of configuration parameters, and the set of configuration parameters includes the cell identifier of the cell where the mobile terminal is located. After receiving the information about the request for configuring the bandwidth control policy, the PCRF server acquires therefrom the set of configuration parameters, for example, the cell identifier of the cell where the mobile terminal is located, and then, according to the cell identifier, finds a matched bandwidth control policy in the set of bandwidth control policies preconfigured by the operator in the PCRF server.

According to the processing method for bandwidth control in this embodiment, the PCRF receives the information about the request for configuring the bandwidth control policy sent by the NAS or Gateway; acquires therefrom the set of configuration parameters including the cell identifier of the cell where the mobile terminal is located; and dynamically configures the bandwidth control policy for the mobile terminal according to the set of configuration parameters and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

Based on the preceding embodiment, after the PCRF configures a corresponding set of bandwidth control policies for the mobile terminal, the method further includes: sending, by the PCRF server, the configured bandwidth control policy to the NAS or Gateway.

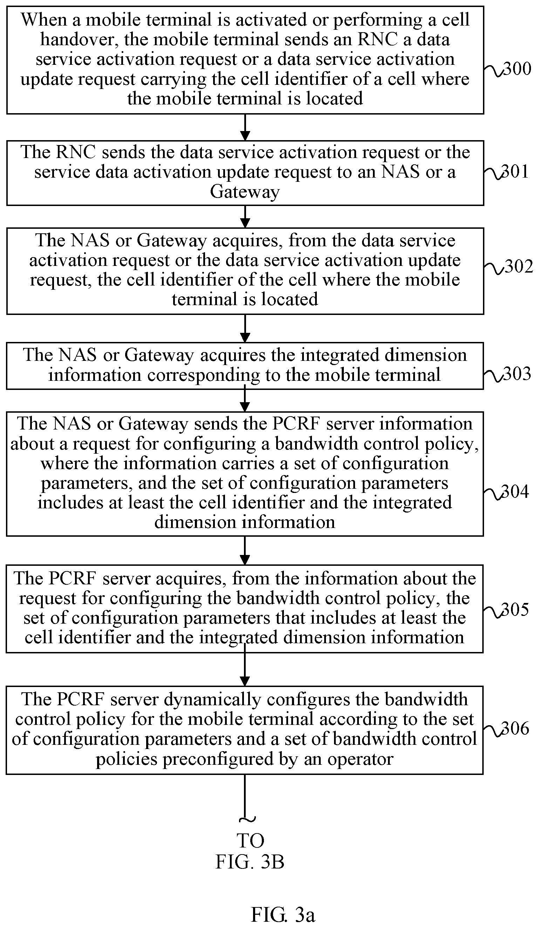

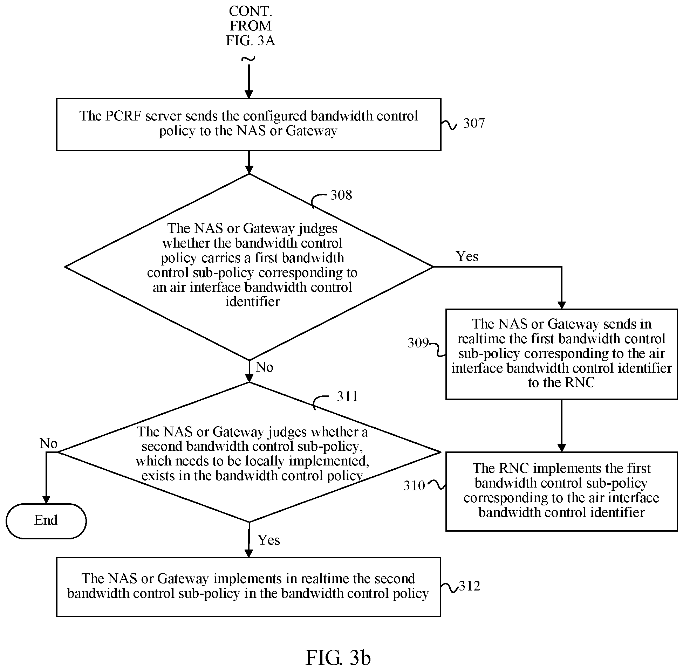

FIG. 3 is a flow chart of a processing method for bandwidth control according to a third embodiment of the present invention. As shown in FIG. 3, in the processing method for bandwidth control of this embodiment, a PCRF server dynamically configures a bandwidth control policy for a mobile terminal. Specifically, the following steps may be included:
Step 300: When the mobile terminal is activated or performing a cell handover, the mobile terminal sends to an RNC a data service activation request or a data service activation update request carrying a cell identifier of a cell where the mobile terminal is located.
Step 301: The RNC sends the data service activation request or the data service activation update request to an NAS or a Gateway.
Step 302: The NAS or Gateway acquires, from the data service activation request or the data service activation update request, the cell identifier of the cell where the mobile terminal is located.
Step 303: The NAS or Gateway acquires integrated dimension information corresponding to the mobile terminal.

The integrated dimension information may include any parameter in the preceding embodiments.

Step 304: The NAS or Gateway sends information about a request for configuring a bandwidth control policy to the PCRF server, where the information carries a set of configuration parameters, and the set of configuration parameters includes at least the cell identifier and the integrated dimension information.

Step 305: The PCRF server acquires, from the information about the request for configuring the bandwidth control policy, the set of configuration parameters that includes at least the cell identifier and the integrated dimension information.

Step 306: The PCRF server dynamically configures the bandwidth control policy for the mobile terminal according to the set of configuration parameters and a set of bandwidth control policies preconfigured by an operator.

Step 307: The PCRF server sends the configured bandwidth control policy to the NAS or Gateway.

Step 308: The NAS or Gateway judges whether the bandwidth control policy carries a first bandwidth control sub-policy corresponding to an air interface bandwidth control identifier. If yes, step 309 is executed. Otherwise, step 311 is executed.

Step 309: The NAS or Gateway sends in real time the first bandwidth control sub-policy corresponding to the air interface bandwidth control identifier to the RNC.

Step 310: The RNC implements the first bandwidth control sub-policy corresponding to the air interface bandwidth control identifier.

Step 311: The NAS or Gateway judges whether a second bandwidth control sub-policy, which needs to be locally implemented, exists in the bandwidth control policy. When the second bandwidth control sub-policy, which needs to be locally implemented, exists, step 312 is executed. Otherwise, the procedure ends.

Step 312: The NAS or Gateway implements in real time the second bandwidth control sub-policy in the bandwidth control policy.

According to the processing method for bandwidth control in this embodiment, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

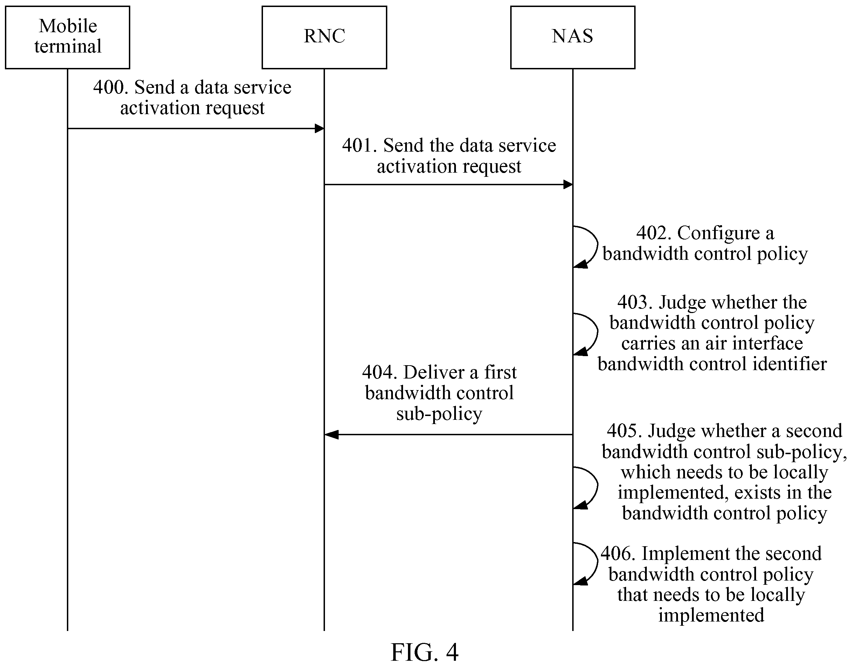

FIG. 4 is a signaling diagram of a processing method for bandwidth control according to a fourth embodiment of the present invention. As shown in FIG. 4, in the processing method for bandwidth control of this embodiment, an NAS implements in real time configuration of a bandwidth control policy for a mobile terminal and executes the corresponding bandwidth control policy. Specifically, the following steps may be included:
Step 400: The mobile terminal sends to an RNC a data service activation request carrying a cell identifier of a cell where the mobile terminal is located.
Step 401: The RNC sends the data service activation request to the NAS.
Step 402: The NAS finds, from a set of bandwidth control policies preconfigured by an operator in the NAS, a matched bandwidth control policy for the mobile terminal according to the cell identifier and integrated dimension information corresponding to the mobile terminal.

The NAS receives the data service activation request sent by the RNC, which is mainly used to set up a data service link. When the mobile terminal is online, the NAS may further acquire, from the data service activation request, the cell identifier of the cell where the mobile terminal is located, and then execute the preceding step 402 to configure the bandwidth control policy for the mobile terminal.

Step 403: The NAS judges whether the bandwidth control policy carries an air interface bandwidth control identifier.

Step 404: If the bandwidth control policy carries the air interface bandwidth identifier, the NAS delivers in real time a first bandwidth control sub-policy corresponding to the air interface bandwidth identifier to the RNC, allowing the RNC to implement bandwidth control over the mobile terminal.

Step 405: The NAS judges whether a second bandwidth control sub-policy, which needs to be locally implemented, exists in the bandwidth control policy.

Step 406: If the second bandwidth control sub-policy, which needs to be locally implemented, exists in the bandwidth control policy, the NAS implements the second bandwidth control sub-policy that needs to be locally implemented, thereby achieving bandwidth control over the mobile terminal. Otherwise, the procedure ends.

Specifically, for the integrated dimension information and the operator's configuration information involved in this embodiment, reference may be made to the record in the preceding related embodiments. For details about the implementation procedure, reference may also be made to the preceding related method embodiments.

According to the processing method for bandwidth control in this embodiment, the NAS acquires, from the received data service activation request sent by the RNC, the cell identifier of the cell where the mobile terminal is located; configures the bandwidth control policy for the mobile terminal according to the cell identifier, the integrated dimension information, and the set of bandwidth control policies preconfigured by the operator; and finally implements the bandwidth control policy. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

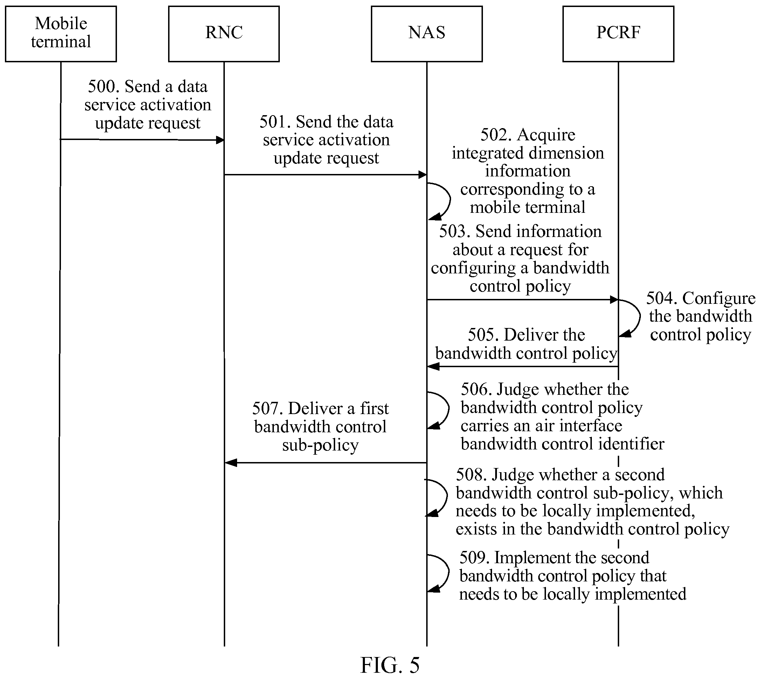

FIG. 5 is a signaling diagram of a processing method for bandwidth control according to a fifth embodiment of the present invention. As shown in FIG. 5, in the processing method for bandwidth control of this embodiment, when a mobile terminal is performing a cell handover, a Policy and Charging Rules Function PCRF server implements in real time configuration of a bandwidth control policy for the mobile terminal, and an NAS executes the corresponding bandwidth control policy. Specifically, the following steps may be included:
Step 500: When the mobile terminal roams from another cell into a current cell, the mobile terminal sends to an RNC a data service activation update request carrying a cell identifier of a cell where the mobile terminal is located.

The data service activation update request carries cell handover information.

Step 501: The RNC sends the data service activation update request to the NAS.

Step 502: The NAS acquires integrated dimension information corresponding to the mobile terminal.

Step 503: The NAS sends information about a request for configuring a bandwidth control policy to the PCRF server, where the information carries the cell identifier and the integrated dimension information.

The NAS receives the data service activation update request sent by the RNC, which is mainly used to set up a data service link. When the mobile terminal is online, the NAS may further acquire, from the data service activation update request, the cell identifier of the cell where the mobile terminal is located, and meanwhile the NAS acquires, according to step 502, the integrated dimension information corresponding to the mobile terminal, and then executes the preceding step 503 to configure the bandwidth control policy for the mobile terminal.

Step 504: The PCRF server finds, from a set of bandwidth control policies preconfigured by an operator in the PCRF server, a matched bandwidth control policy for the mobile terminal according to the cell identifier and the integrated dimension information.

Step 505: The PCRF delivers the bandwidth control policy to the NAS.

Step 506: The NAS judges whether the bandwidth control policy carries an air interface bandwidth control identifier.

Step 507: If the bandwidth control policy carries the air interface bandwidth control identifier, the NAS delivers in real time a first bandwidth control sub-policy corresponding to the air interface bandwidth identifier to the RNC, allowing the RNC to implement bandwidth control over the mobile terminal.

Step 508: The NAS judges whether a second bandwidth control sub-policy, which needs to be locally implemented, exists in the bandwidth control policy.

Step 509: If the second bandwidth control sub-policy, which needs to be locally implemented, exists in the bandwidth control policy, the NAS implements the second bandwidth control sub-policy that needs to be locally implemented, thereby achieving bandwidth control over the mobile terminal. Otherwise, the procedure ends.

Specifically, for the integrated dimension information and the operator's configuration information involved in this embodiment, reference may be made to the record in the preceding related embodiments. For details about the implementation procedure, reference may also be made to the preceding related method embodiments.

According to the processing method for bandwidth control in this embodiment, the NAS sends information about the request for configuring the bandwidth control policy to the PCRF server, where the information carries configuration parameters including the cell identifier; and after receiving the information about the request for configuring the bandwidth control policy, the PCRF server may find, from the set of bandwidth control policies preconfigured by the operator in the PCRF server, the matched bandwidth control policy according to the cell identifier in the configuration parameters and the integrated dimension information, and finally the bandwidth control policy is implemented. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

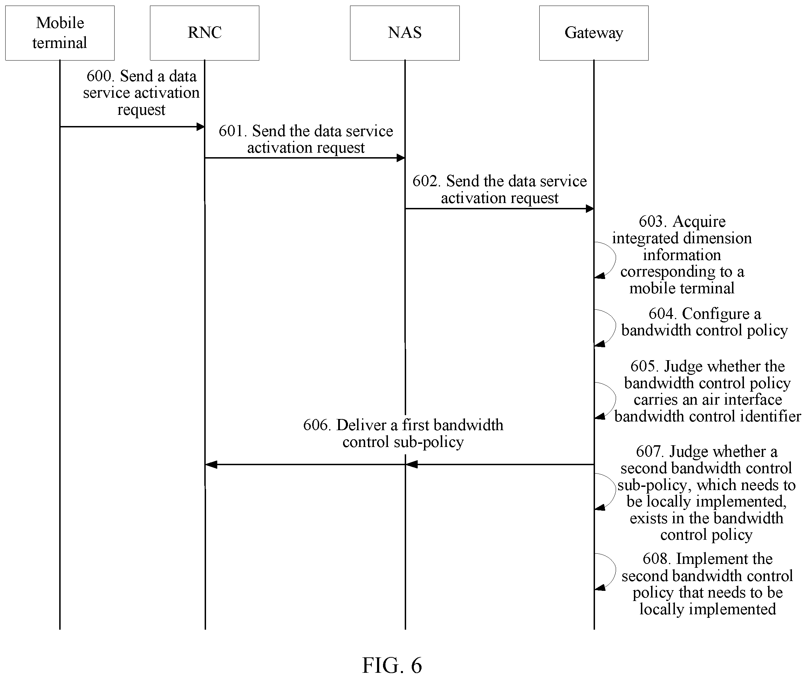

FIG. 6 is a signaling diagram of a processing method for bandwidth control according to a sixth embodiment of the present invention. As shown in FIG. 6, in the processing method for bandwidth control of this embodiment, a service network gateway implements in real time configuration of a bandwidth control policy for a mobile terminal when the mobile terminal is activated. Specifically, the following steps may be included:
Step 600: The mobile terminal sends to an RNC a data service activation request carrying a cell identifier of a cell where the mobile terminal is located.
Step 601: The RNC sends the data service activation request to an NAS.
Step 602: The NAS sends the data service activation request to the Gateway.
Step 603: The Gateway acquires integrated dimension information corresponding to the mobile terminal.
Step 604: The Gateway configures, from a set of bandwidth control policies preconfigured by an operator in the Gateway, a bandwidth control policy carrying the identifier of the mobile terminal for the mobile terminal according to the cell identifier and the integrated dimension information corresponding to the mobile terminal.

The Gateway receives, through the NAS, the data service activation request sent by the RNC, which is mainly used to set up a data service link. When the mobile terminal is online, the Gateway may further acquire, from the data service activation request, the cell identifier of the cell where the mobile terminal is located, and meanwhile the Gateway acquires, according to step 603, the integrated dimension information corresponding to the mobile terminal, and then executes the preceding step 604 to configure the bandwidth control policy for the mobile terminal.

Step 605: The Gateway judges whether the bandwidth control policy carries an air interface bandwidth control identifier.

Step 606: If the bandwidth control policy carries the air interface bandwidth control identifier, the Gateway delivers in real time a first bandwidth control sub-policy corresponding to the air interface bandwidth control identifier in the bandwidth control policy through the NAS to the RNC, allowing the RNC to implement the corresponding first bandwidth control sub-policy and achieve bandwidth control over the mobile terminal.

It should be noted that, the Gateway may also send the bandwidth control policy to the NAS to judge whether the bandwidth control policy carries the air interface bandwidth control identifier; if the air interface bandwidth control identifier is carried, the NAS sends the bandwidth control policy to the RNC, allowing the RNC to implement the bandwidth control policy and achieve bandwidth control over the mobile terminal.

Step 607: The Gateway judges whether a second bandwidth control sub-policy, which needs to be locally implemented, exists in the bandwidth control policy.

Step 608: If the second bandwidth control sub-policy, which needs to be locally implemented, exists in the bandwidth control policy, the Gateway implements the second bandwidth control sub-policy that needs to be locally implemented, thereby achieving bandwidth control over the mobile terminal.

Specifically, for the integrated dimension information and the set of bandwidth control policies preconfigured by the operator involved in this embodiment, reference may be made to the record in the preceding related embodiments. For details about the implementation procedure, reference may also be made to the preceding related method embodiments.

According to the processing method for bandwidth control in this embodiment, the Gateway acquires, from the data service activation request sent by the RNC, the cell identifier of the cell where the mobile terminal is located, and meanwhile acquires the integrated dimension information corresponding to the mobile terminal, configures the bandwidth control policy carrying the identifier of the mobile terminal for the mobile terminal according to the cell identifier, the integrated dimension information, and the set of bandwidth control policies preconfigured by the operator, and finally implements the bandwidth control policy. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

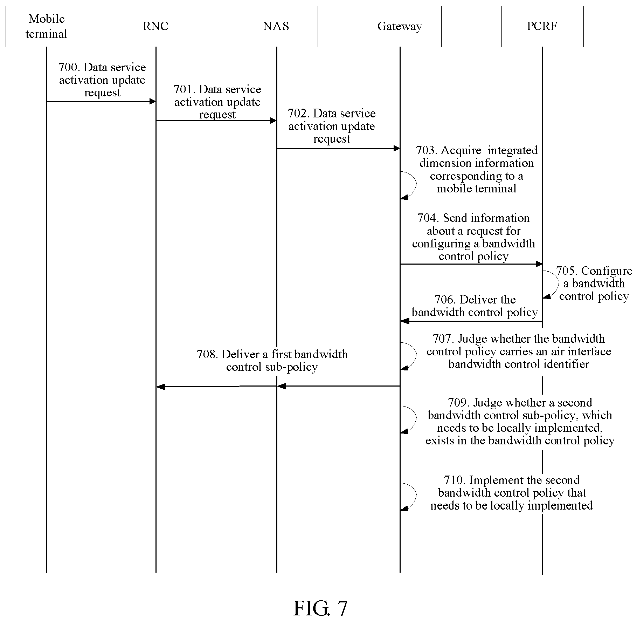

FIG. 7 is a signaling diagram of a processing method for bandwidth control according to a seventh embodiment of the present invention. As shown in FIG. 7, in the processing method for bandwidth control of this embodiment, a PCRF implements in real time configuration of a bandwidth control policy for a mobile terminal when the mobile terminal is performing a cell handover, which differs from that shown in FIG. 5 in that, a Gateway in this solution implements a local bandwidth control policy and delivers a bandwidth control policy carrying an air interface control identifier. Specifically, the following steps may be included:
Step 700: When the mobile terminal roams from another cell into a current cell, the mobile terminal sends to an RNC a data service activation update request carrying a cell identifier of a cell where the mobile terminal is located.
Step 701: The RNC sends the data service activation update request to an NAS.
Step 702: The NAS sends the data service activation update request to the Gateway.
Step 703: The Gateway acquires integrated dimension information corresponding to the mobile terminal.
Step 704: The Gateway sends information about a request for configuring a bandwidth control policy to the PCRF server, where the information carries the cell identifier and the integrated dimension information.
Step 705: The PCRF server finds, from a set of bandwidth control policies preconfigured by an operator in the PCRF server, a matched bandwidth control policy for the mobile terminal according to the cell identifier and the integrated dimension information.

The Gateway receives, through the NAS, the data service activation update request sent by the RNC, which is mainly used to set up a data service link. When the mobile terminal is online, the Gateway may further acquire, from the data service activation update request, the cell identifier of the cell where the mobile terminal is located, and meanwhile the Gateway acquires, according to step 403, the integrated dimension information corresponding to the mobile terminal and sends the identifier of the mobile terminal, the cell identifier and the integrated dimension information to the PCRF server according to step 404, and then the PCRF executes the preceding step 405 to configure the bandwidth control policy for the mobile terminal.

Step 706: The PCRF server sends the bandwidth control policy to the Gateway.

Step 707: The Gateway judges whether the bandwidth control policy carries an air interface bandwidth control identifier.

Step 708: If the air interface bandwidth control identifier is carried in the bandwidth control policy, the Gateway sends a first bandwidth control sub-policy corresponding to the air interface bandwidth identifier in the bandwidth control policy through the NAS to the RNC, allowing the RNC to implement the corresponding first bandwidth control sub-policy and achieve bandwidth control over the mobile terminal.

It should be noted that, the Gateway may also send the bandwidth control policy to the NAS, and judge whether the bandwidth control policy carries the air interface bandwidth control identifier; if the air interface bandwidth control identifier is carried, the NAS sends the bandwidth control policy to the RNC to implement bandwidth control over the mobile terminal. Meanwhile the NAS further needs to judge whether a bandwidth control policy, which needs to be implemented by the NAS, exists in the bandwidth control policy. If yes, the bandwidth control policy is implemented by the NAS to achieve bandwidth control over the mobile terminal.

Step 709: The Gateway judges whether a second bandwidth control sub-policy, which needs to be locally implemented, exists in the bandwidth control policy.

Step 710: If the second bandwidth control sub-policy, which needs to be locally implemented, exists in the bandwidth control policy, the Gateway implements the second bandwidth control sub-policy that needs to be locally implemented, thereby achieving bandwidth control over the mobile terminal.

Specifically, for the integrated dimension information and the operator's configuration information involved in this embodiment, reference may be made to the record in the preceding related embodiments. For details about the implementation procedure, reference may also be made to the preceding related method embodiments.

According to the processing method for bandwidth control in this embodiment, the Gateway sends information about the request for configuring the bandwidth control policy to the PCRF server, where the information carries configuration parameters including the cell identifier; and after receiving the information about the request for configuring the bandwidth control policy, the PCRF server may find, from the set of bandwidth control policies preconfigured by the operator in the PCRF server, the matched bandwidth control policy according to the cell identifier in the configuration parameters; and the PCRF server sends the bandwidth control policy to the Gateway, and the Gateway judges which device needs to implement the bandwidth control policy, and the bandwidth control policy is implemented. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

Persons of ordinary skill in the art should understand that, all or part of the steps in the embodiments may be implemented by a program instructing relevant hardware. The program may be stored in a readable storage medium of a computer. When the program is run, the above steps of the methods in the embodiments are performed. The storage medium includes a ROM, a RAM, a magnetic disk, an optical disk, and any other medium that is capable of storing program codes.

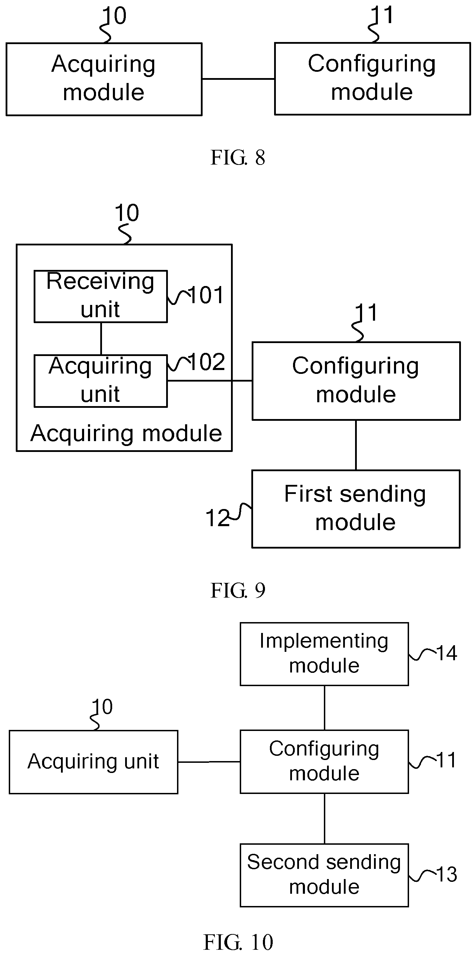

FIG. 8 is a schematic structural diagram of a mobile communications network device according to an eighth embodiment of the present invention. As shown in FIG. 8, the mobile communications network device in this embodiment may specifically include: an acquiring module 10 and a configuring module 11.

In this embodiment, the acquiring module 10 of the mobile communications network device is adapted to acquire, when detecting that a mobile terminal is activated or the mobile terminal is performing a cell handover, a set of configuration parameters including a cell identifier of a cell where the mobile terminal is located; and the configuring module 11 is adapted to dynamically configure a bandwidth control policy for the mobile terminal according to the set of configuration parameters acquired by the acquiring module 10 and a set of bandwidth control policies preconfigured by an operator, where the set of bandwidth control policies includes a bandwidth control policy corresponding to the cell identifier.

The processing method for achieving bandwidth control by using the preceding modules of the mobile communications network device in this embodiment is the same as the implementation mechanism in the preceding related method embodiments. The details will not be described herein again, and reference may be made to the record in the preceding related method embodiments.

By using each of the modules, the mobile communications network device in this embodiment acquires, when detecting that the mobile terminal is activated or the mobile terminal is performing the cell handover, the set of configuration parameters including the cell identifier of the cell where the mobile terminal is located, and dynamically configures the bandwidth control policy for the mobile terminal according to the set of configuration parameters and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

The mobile communications network device in this embodiment may specifically be an NAS, a Gateway, or a PCRF server.

When the mobile communications network device in this embodiment is an NAS or a Gateway, the acquiring module 10 is specifically adapted to acquire, from a data service activation request or a data service activation update request sent by an RNC, the cell identifier of the cell where the mobile terminal is located and obtain the set of configuration parameters including the cell identifier.

FIG. 9 is a schematic structural diagram of a mobile communications network device according to a ninth embodiment of the present invention. The mobile communications network device in this embodiment is specifically a PCRF server. As shown in FIG. 9, the acquiring module 10 of the mobile communications network device in this embodiment, based on the preceding embodiment shown in FIG. 8, may specifically include: a receiving unit 101 and an acquiring unit 102.

The receiving unit 101 is adapted to receive information about a request for configuring a bandwidth control policy sent by an NAS or a Gateway. The acquiring unit 102 is connected to the receiving unit 101. The acquiring unit 102 is adapted to acquire, from the information about the request for configuring the bandwidth control policy received by the receiving unit 101, a set of configuration parameters including a cell identifier. At this time, the configuring module 11 is connected to the acquiring unit 102. The configuring module 11 is adapted to dynamically configure a bandwidth control policy for a mobile terminal according to the set of configuration parameters acquired by the acquiring unit 102 and a set of bandwidth control policies preconfigured by an operator, where the set of bandwidth control policies includes the bandwidth control policy corresponding to the cell identifier.

It should be noted that, based on the preceding embodiments, when the mobile communications network device is a PCRF server, the mobile communications network device, further includes a first sending module 12. The first sending module 12 is connected to the configuring module 11. The first sending module 12 is adapted to send the bandwidth control policy configured by the configuring module 11 to the NAS or Gateway.

The processing method for achieving bandwidth control by using the preceding modules of the mobile communications network device in this embodiment is the same as the implementation mechanism in the preceding related method embodiments. The details will not be described herein again, and reference may be made to the record in the preceding related method embodiments.

By using the preceding modules, the mobile communications network device in this embodiment receives the information about the request for configuring the bandwidth control policy sent by the NAS or Gateway, acquires therefrom the set of configuration parameters including the cell identifier of the cell where the mobile terminal is located, and dynamically configures the bandwidth control policy for the mobile terminal according to the set of configuration parameters and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

It should be noted that, based on the preceding embodiments, the set of configuration parameters acquired by the acquiring module 10, further includes integrated dimension information corresponding to the mobile terminal, where the integrated dimension information may include one or more of the following: type of a service using by the mobile terminal, user type of the mobile terminal, user priority of the mobile terminal, APN of the mobile terminal, bearer type of the mobile terminal, and time when the mobile terminal is activated or when the mobile terminal is performing a cell handover. The details will not be described herein again, and reference may be made to the preceding related method embodiments.

FIG. 10 is a schematic structural diagram of a mobile communications network device according to a tenth embodiment of the present invention. As shown in FIG. 10, when the mobile communications network device is an NAS or a Gateway, the mobile communications network device, based on the preceding technical solution shown in FIG. 8, further includes: a second sending module 13 and an implementing module 14.

In this embodiment, the second sending module 13 is connected to the configuring module 11. The second sending module 13 is adapted to, when determining that a bandwidth control policy configured by the configuring module 11 includes a first bandwidth control sub-policy corresponding to an air interface bandwidth control identifier, send the first bandwidth control sub-policy to an RNC, allowing the RNC to implement the first bandwidth control sub-policy. The implementing module 14 is also connected to the configuring module 11. The implementing module 14 is adapted to implement a second bandwidth control sub-policy in the bandwidth control policy when the implementing module 14 determines that the second bandwidth control sub-policy, which needs to be locally implemented, exists in the bandwidth control policy configured by the configuring module 11.

The processing method for achieving bandwidth control by using the preceding modules of the mobile communications network device in this embodiment is the same as the implementation mechanism in the preceding related method embodiments. The details will not be described herein again, and reference may be made to the record in the preceding related method embodiments.

By using each of the modules, the mobile communications network device in this embodiment is capable of effectively implementing configuration of a bandwidth control policy for the mobile terminal according to the identifier of a cell where a mobile terminal is located. According to the technical solution in this embodiment, bandwidth in a densely populated cell can be properly increased, and bandwidth in a sparsely populated cell can be properly decreased, thereby not only making rational use of bandwidth resources, but also effectively improving bandwidth control efficiency.

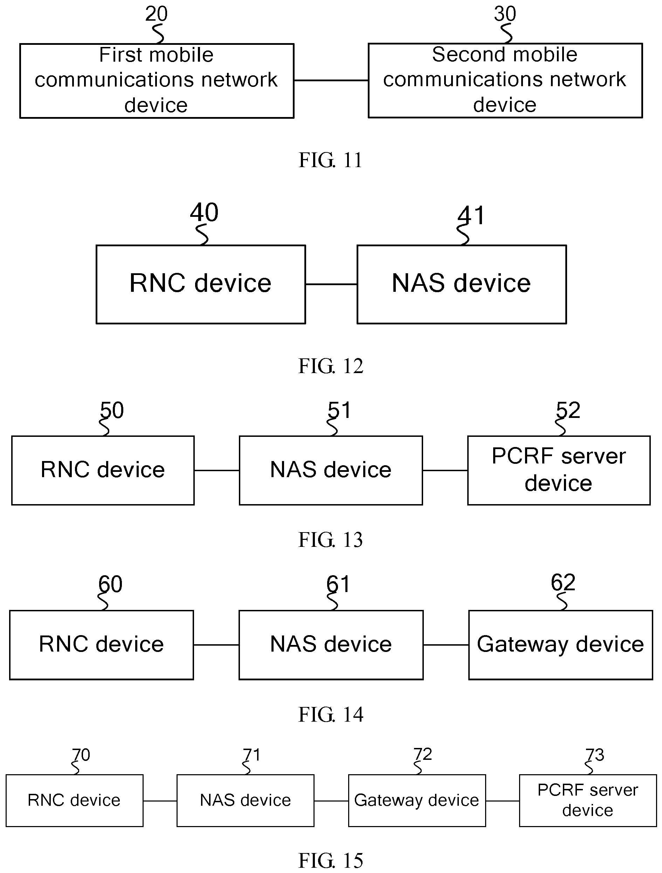

FIG. 11 is a schematic structural diagram of a bandwidth control system according to an eleventh embodiment of the present invention. As shown in FIG. 11, the bandwidth control system in this embodiment includes a first mobile communications network device 20 and a second mobile communications network device 30.

The second mobile communications network device 30 is adapted to communicate with the first mobile communications network device 20, and send a set of configuration parameters including a cell identifier of a cell where a mobile terminal is located to the first mobile communications network device 20, so that the first mobile communications network device 20 acquires, when detecting that the mobile terminal is activated or the mobile terminal is performing a cell handover, the set of configuration parameters, and dynamically configures a bandwidth control policy for the mobile terminal according to the set of configuration parameters and a set of bandwidth control policies preconfigured by an operator, where the set of bandwidth control policies includes a bandwidth control policy corresponding to the cell identifier.

In this embodiment, the first mobile communications network device 20 in the bandwidth control system may specifically be an NAS, a Gateway or a PCRF server. When the first mobile communications network device 20 is an NAS or a Gateway, the second mobile communications network device 30 may be an RNC. When the first mobile communications network device 20 is a PCRF server, the second mobile communications network device 30 may be an NAS or a Gateway.

The mobile communications network device in any of the preceding embodiments shown in FIGs. 8-10 may be used as the first mobile communications network device 20 in the bandwidth control system of this embodiment. The details will not be described herein again, and reference may be made to the preceding related method embodiments.

According to the bandwidth control system in this embodiment, the second mobile communications network device sends the set of configuration parameters including the cell identifier of the cell where the mobile terminal is located to the first mobile communications network device, so that the first mobile communications network device acquires, when detecting that the mobile terminal is activated or the mobile terminal is performing the cell handover, the set of configuration parameters, and dynamically configures the bandwidth control policy for the mobile terminal according to the set of configuration parameters and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

FIG. 12 is a schematic structural diagram of a processing system for bandwidth control according to a twelfth embodiment of the present invention. As shown in FIG. 12, the processing system for bandwidth control in this embodiment, based on the preceding embodiment shown in FIG. 11, may specifically include: an RNC device 40 and an NAS device 41. The RNC device 40 has a communication connection with the NAS device 41.

In this embodiment, the RNC device 40 in the processing system for bandwidth control is adapted to receive a data service activation request that is sent by a mobile terminal and carries a cell identifier of a cell where the mobile terminal is located; and send the received data service activation request to the NAS device 41.

The NAS device 41 is adapted to receive the data service activation request sent by the RNC device 40; acquire, from the data service activation request, the cell identifier of the mobile terminal when the mobile terminal is online; and configure a bandwidth control policy carrying the identifier of the mobile terminal for the mobile terminal according to configuration parameters including the cell identifier and a set of bandwidth control policies preconfigured by an operator.

The mobile communications network device in the preceding related embodiments may be used as the NAS device 41 in the processing system for bandwidth control in this embodiment.

The processing method for bandwidth control by using the RNC device 40 and NAS device 41 in the processing system for bandwidth control in this embodiment is the same as the implementation mechanism in the preceding related method embodiments. The details will not be described herein again, and reference may be made to the record in the preceding related method embodiments.

In this embodiment, the NAS device in the processing system for bandwidth control configures the bandwidth control policy carrying the identifier of the mobile terminal in the cell for the mobile terminal according to the cell identifier of the mobile terminal and the operator's configuration information. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

FIG. 13 is a schematic structural diagram of a processing system for bandwidth control according to a thirteenth embodiment of the present invention. As shown in FIG. 13, the processing system for bandwidth control in this embodiment, based on the preceding embodiment shown in FIG. 11, may specifically include: an RNC device 50, an NAS device 51, and a PCRF server device 52. The RNC device 50 has a communication connection with the NAS device 51, and the NAS device 51 has a communication connection with the PCRF server device 52.

In this embodiment, the RNC device 50 in the processing system for bandwidth control is adapted to receive a data service activation request that is sent by a mobile terminal and carries a cell identifier of a cell where the mobile terminal is located; and send the data service activation request to the NAS device 51.

The NAS device 51 is adapted to receive the data service activation request sent by the RNC device 50; acquire, when the mobile terminal is online, the cell identifier of the mobile terminal from the data service activation request; and send information about a request for configuring a bandwidth control policy to the PCRF server device 52, where the information carries configuration parameters including the cell identifier.

The PCRF server device 52 is adapted to receive the information about the request for configuring the bandwidth control policy sent by the NAS device 51, and configure the bandwidth control policy for the mobile terminal according to the configuration parameters in the information about the request for configuring the bandwidth control policy and a set of bandwidth control policies preconfigured by an operator in the PCRF server device 52.

The processing method for bandwidth control by using the RNC device 50, the NAS device 51, and the PCRF server device 52 in the processing system for bandwidth control in this embodiment is the same as the implementation mechanism in the preceding related method embodiments. The details will not be described herein again, and reference may be made to the record in the preceding related method embodiments.

The mobile communications network device in the preceding related embodiments may be used as the PCRF server device 52 in the processing system for bandwidth control in this embodiment.

According to the processing system for bandwidth control in this embodiment, the PCRF server device receives the information about the request for configuring the bandwidth control policy, where the information carries the configuration parameters including the cell identifier and is sent by the NAS device. The PCRF server device finds, from the set of bandwidth control policies preconfigured by the operator in the PCRF server, a matched bandwidth control policy according to the cell identifier in the configuration parameters. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

FIG. 14 is a schematic structural diagram of a processing system for bandwidth control according to a fourteenth embodiment of the present invention. As shown in FIG. 14, the processing system for bandwidth control in this embodiment, based on the preceding embodiment shown in FIG. 11, may specifically include: an RNC device 60, an NAS device 61, and a Gateway device 62. The RNC device 60 has a communication connection with the NAS device 61, and the NAS device 61 has a communication connection with the Gateway device 62.

In this embodiment, the RNC device 60 in the processing system for bandwidth control is adapted to receive a data service activation request that is sent by a mobile terminal and carries a cell identifier of a cell where the mobile terminal is located; and send the data service activation request to the NAS device 61.

The NAS device 61 is adapted to receive the data service activation request sent by the RNC device 60; and forward the data service activation request to the Gateway device 62.

The Gateway device 62 is adapted to receive the data service activation request sent by the NAS device 61; acquire, from the data service activation request, the cell identifier of the mobile terminal when the mobile terminal is online; and configure a bandwidth control policy carrying the identifier of the mobile terminal for the mobile terminal according to configuration parameters including the cell identifier and a set of bandwidth control policies preconfigured by an operator.

The processing method for bandwidth control by using the RNC device 60, the NAS device 61, and the Gateway device 62 in the processing system for bandwidth control in this embodiment is the same as the implementation mechanism in the preceding related method embodiments. The details will not be described herein again, and reference may be made to the record in the preceding related method embodiments.

The mobile communications network device in the preceding related embodiments may be used as the Gateway device 62 in the processing system for bandwidth control in this embodiment.

According to the processing system for bandwidth control in this embodiment, the Gateway device acquires, from the data service activation request sent by the NAS device, the cell identifier of the cell where the mobile terminal is located through the RNC device; and configures the bandwidth control policy for the mobile terminal according to the configuration parameters including the cell identifier and the set of bandwidth control policies preconfigured by the operator. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

FIG. 15 is a schematic structural diagram of a processing system for bandwidth control according to a fifteenth embodiment of the present invention. As shown in FIG. 15, the processing system for bandwidth control in this embodiment, based on the preceding embodiment shown in FIG. 11, may specifically include: an RNC device 70, an NAS device 71, a Gateway device 72, and a PCRF server device 73.

In this embodiment, the RNC device 70 in the processing system for bandwidth control is adapted to receive a data service activation request that is sent by a mobile terminal and carries a cell identifier of a cell where the mobile terminal is located; and send the data service activation request to the NAS device 71.

The NAS device 71 is adapted to receive the data service activation request sent by the RNC device 70; and forward the data service activation request to the Gateway device 72.

The Gateway device 72 is adapted to receive the data service activation request sent by the NAS device 71; acquire the cell identifier of the mobile terminal from the data service activation request when the mobile terminal is online; and send information about a request for configuring a bandwidth control policy to the PCRF server device 73, where the information carries configuration parameters including the cell identifier.

The PCRF server device 73 is adapted to receive the information about the request for configuring the bandwidth control policy sent by the Gateway device 72; and configure the bandwidth control policy for the mobile terminal according to the configuration parameters and a set of bandwidth control policies preconfigured by an operator.

The processing method for bandwidth control by using the RNC device 70, the NAS device 71, the Gateway device 72, and the PCRF server device 73 in the processing system for bandwidth control in this embodiment is the same as the implementation mechanism in the preceding related method embodiments. The details will not be described herein again, and reference may be made to the record in the preceding related method embodiments.

The mobile communications network device in the preceding related embodiments may be used as the PCRF server device 73 in the processing system for bandwidth control in this embodiment.

According to the processing system for bandwidth control in this embodiment, the PCRF server device receives the information about the request for configuring the bandwidth control policy, where the information carries the configuration parameters including the cell identifier and is sent by the Gateway device; and finds, from the set of bandwidth control policies preconfigured by the operator in the PCRF server device, a matched bandwidth control policy according to the cell identifier in the configuration parameters. According to the technical solution in this embodiment, the scenario where different bandwidth control policies cannot be implemented in different cells in the prior art is changed, the bandwidth control policy can be configured for the mobile terminal according to the identifier of the cell where the mobile terminal is located, bandwidth in a densely populated cell can be properly increased, and bandwidth in a sparsely populated cell can be properly decreased, thereby not only making rational use of bandwidth resources, but also effectively improving bandwidth control efficiency.

The apparatus embodiments described above are merely illustrative. The units described as stand-alone components above may be separated physically or not; and the components shown as units may be physical units or not, that is, the units may be located in one place, or distributed on at least two network elements. A part of or all of the modules may be selected to achieve the objective of the solutions of the embodiments according to actual demands. Persons of ordinary skill in the art may understand and implement the embodiments without creative efforts.

Finally, it should be noted that the above embodiments are merely intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments, or make equivalent substitutions to some technical features thereof, without departing from the scope of the technical solutions of the embodiments of the present invention.

## Claims

1. A processing method for bandwidth control, comprising:
acquiring (305), by a Policy and Charging Rules Function server, a set of configuration parameters comprising a cell identifier of a cell where a mobile terminal is located from a request for configuring a bandwidth control policy sent by a network access server or a service network gateway to the Policy and Charging Rules Function server when detecting that the mobile terminal is activated or the mobile terminal is performing a cell handover; and
dynamically configuring (306), by the Policy and Charging Rules Function server, a bandwidth control policy for the mobile terminal according to the set of configuration parameters and a set of bandwidth control policies preconfigured by an operator, wherein the set of bandwidth control policies comprises a bandwidth control policy corresponding to the cell identifier;
**characterized in that** the configuring process further comprising:
sending, by the Policy and Charging Rules Function server, the bandwidth control policy to the network access server or the service network gateway;
sending (307), by the network access server or the service network gateway, in real time, when determining that the configured bandwidth control policy comprises a first bandwidth control sub-policy corresponding to an air interface bandwidth control identifier, the first bandwidth control sub-policy to a radio network controller, allowing the radio network controller to implement the first bandwidth control sub-policy; and
implementing (312), by the network access server or the service network gateway, in real time, when determining that a second bandwidth control sub-policy, which needs to be locally implemented, exists in the bandwidth control policy, the second bandwidth control sub-policy in the bandwidth control policy.

2. The processing method for bandwidth control according to claim 1, wherein the set of configuration parameters further comprises integrated dimension information corresponding to the mobile terminal; and
the integrated dimension information comprises one or more of the following: type of a service used by the mobile terminal, user type of the mobile terminal, user priority of the mobile terminal, access point name of the mobile terminal, bearer type of the mobile terminal, and time when the mobile terminal is activated or when the mobile terminal is performing a cell handover.

3. A mobile communications network device, comprising:
an acquiring module (10), adapted to acquire, when detecting that a mobile terminal is activated or a mobile terminal is performing a cell handover, a set of configuration parameters comprising a cell identifier of a cell where the mobile terminal is located; and
a configuring module (11), adapted to dynamically configure a bandwidth control policy for the mobile terminal according to the set of configuration parameters and a set of bandwidth control policies preconfigured by an operator, wherein the set of bandwidth control policies comprises a bandwidth control policy corresponding to the cell identifier;
wherein the set of configuration parameters acquired by the acquiring module (10) further comprises integrated dimension information corresponding to the mobile terminal; and the integrated dimension information comprises one or more of the following: type of a service used by the mobile terminal, user type of the mobile terminal, user priority of the mobile terminal, access point of the mobile terminal, bearer type of the mobile terminal, and time when the mobile terminal sends a data service activation request;
wherein the mobile communications network device is a network access server or a service network gateway; the acquiring module (10) is specifically adapted to acquire, from a data service activation request or a data service activation update request sent by a radio network controller, the set of configuration parameters comprising the cell identifier, and
**characterized in that** the mobile communications network device further comprises:
a second sending module (13), adapted to send, when determining that the bandwidth control policy comprises a first bandwidth control sub-policy corresponding to an air interface bandwidth control identifier, the first bandwidth control sub-policy to the radio network controller, allowing the radio network controller to implement the first bandwidth control sub-policy; and
an implementing module (14), adapted to implement, when determining that a second bandwidth control sub-policy, which needs to be locally implemented, exists in the bandwidth control policy, the second bandwidth control sub-policy in the bandwidth control policy.

## Patentansprüche

1. Verarbeitungsverfahren zur Bandbreitensteuerung, das Folgendes umfasst:
Erfassen (305), durch einen "Policy and Charging Rules Function"-Server, eines Satzes von Konfigurationsparametern, die eine Zellkennung einer Zelle, in der sich ein mobiles Endgerät befindet, umfassen, aus einer Anfrage zum Konfigurieren einer Bandbreitensteuerrichtlinie, die durch einen Netzwerkzugangsserver oder ein Dienstnetz-Gateway an den "Policy and Charging Rules Function"-Server gesendet wird, wenn detektiert wird, dass das mobile Endgerät aktiviert ist oder das mobile Endgerät eine Zellenweiterreichung durchführt; und
dynamisches Konfigurieren (306), durch den "Policy and Charging Rules Function"-Server, einer Bandbreitensteuerrichtlinie für das mobile Endgerät gemäß dem Satz von Konfigurationsparametern und einem Satz von Bandbreitensteuerrichtlinien, die durch einen Bediener vorkonfiguriert sind, wobei der Satz von Bandbreitensteuerrichtlinien eine Bandbreitensteuerrichtlinie umfasst, die der Zellkennung entspricht;
**dadurch gekennzeichnet, dass** der Konfigurationsprozess ferner Folgendes umfasst:
Senden, durch den "Policy and Charging Rules Function"-Server, der Bandbreitensteuerrichtlinie an den Netzwerkzugangsserver oder das Dienstnetz-Gateway;
Senden (307), durch den Netzwerkzugangsserver oder das Dienstnetz-Gateway, in Echtzeit, wenn bestimmt wird, dass die konfigurierte Bandbreitensteuerrichtlinie eine erste Bandbreitensteuersubrichtlinie, die einer Luftschnittstellen-Bandbreitensteuerkennung entspricht, umfasst, der ersten Bandbreitensteuersubrichtlinie an eine Funknetzsteuerung, was ermöglicht, dass die Funknetzsteuerung die erste Bandbreitensteuersubrichtlinie implementiert; und
Implementieren (312), durch den Netzwerkzugangsserver oder das Dienstnetz-Gateway, in Echtzeit, wenn bestimmt wird, dass eine zweite Bandbreitensteuersubrichtlinie, die lokal implementiert werden muss, in der Bandbreitensteuerrichtlinie vorhanden ist, der zweiten Bandbreitensteuersubrichtlinie in der Bandbreitensteuerrichtlinie.

2. Verarbeitungsverfahren zur Bandbreitensteuerung nach Anspruch 1, wobei der Satz von Konfigurationsparametern ferner integrierte Dimensionsinformationen umfasst, die dem mobilen Endgerät entsprechen; und
die integrierten Dimensionsinformationen eine oder mehrere der folgenden umfassen: Art eines durch das mobile Endgerät verwendeten Dienstes, Benutzertyp des mobilen Endgeräts, Benutzerpriorität des mobilen Endgeräts, Zugangspunktbezeichnung des mobilen Endgeräts, Trägertyp des mobilen Endgeräts und Zeitpunkt, wann das mobile Endgerät aktiviert wird oder wann das mobile Endgerät eine Zellenweiterreichung durchführt.

3. Mobile Kommunikationsnetzvorrichtung, die Folgendes umfasst:
ein Erfassungsmodul (10), das dafür ausgelegt ist, wenn detektiert wird, dass ein mobiles Endgerät aktiviert ist oder ein mobiles Endgerät eine Zellenweiterreichung durchführt, einen Satz von Konfigurationsparametern zu erfassen, die eine Zellkennung einer Zelle, in der sich das mobile Endgerät befindet, umfassen; und
ein Konfigurationsmodul (11), das dafür ausgelegt ist, eine Bandbreitensteuerrichtlinie für das mobile Endgerät gemäß dem Satz von Konfigurationsparametern und einem Satz von Bandbreitensteuerrichtlinien, die durch einen Bediener vorkonfiguriert sind, dynamisch zu konfigurieren, wobei der Satz von Bandbreitensteuerrichtlinien eine Bandbreitensteuerrichtlinie umfasst, die der Zellkennung entspricht;
wobei der Satz von Konfigurationsparametern, der durch das Erfassungsmodul (10) erfasst wird, ferner integrierte Dimensionsinformationen umfasst, die dem mobilen Endgerät entsprechen; und die integrierten Dimensionsinformationen eine oder mehrere der folgenden umfassen: Art eines durch das mobile Endgerät verwendeten Dienstes, Benutzertyp des mobilen Endgeräts, Benutzerpriorität des mobilen Endgeräts, Zugangspunkt des mobilen Endgeräts, Trägertyp des mobilen Endgeräts und Zeitpunkt, wann das mobile Endgerät eine Datendienstaktivierungsanfrage sendet;
wobei die mobile Kommunikationsnetzvorrichtung ein Netzwerkzugangsserver oder ein Dienstnetz-Gateway ist; das Erfassungsmodul (10) spezifisch dafür ausgelegt ist, von einer Datendienstaktivierungsanfrage oder einer Datendienstaktivierungsaktualisierungsanfrage, die durch eine Funknetzsteuerung gesendet wird, den Satz von Konfigurationsparametern, die die Zellkennung umfassen, zu erfassen, und
**dadurch gekennzeichnet, dass** die mobile Kommunikationsnetzvorrichtung ferner Folgendes umfasst:
ein zweites Sendemodul (13), das dafür ausgelegt ist, wenn bestimmt wird, dass die Bandbreitensteuerrichtlinie eine erste Bandbreitensteuersubrichtlinie, die einer Luftschnittstellen-Bandbreitensteuerkennung entspricht, umfasst, die erste Bandbreitensteuersubrichtlinie an die Funknetzsteuerung zu senden, wodurch ermöglicht wird, dass die Funknetzsteuerung die erste Bandbreitensteuersubrichtlinie implementiert; und
ein Implementierungsmodul (14), das dafür ausgelegt ist, wenn bestimmt wird, dass eine zweite Bandbreitensteuersubrichtlinie, die lokal implementiert werden muss, in der Bandbreitensteuerrichtlinie vorhanden ist, die zweite Bandbreitensteuersubrichtlinie in der Bandbreitensteuerrichtlinie zu implementieren.

## Revendications

1. Procédé de traitement permettant un contrôle de bande passante, consistant à :
acquérir (305), au moyen d'un serveur de fonction de règles de politique et de facturation, un ensemble de paramètres de configuration comprenant un identifiant de cellule d'une cellule où un terminal mobile est situé, à partir d'une demande pour configurer une politique de contrôle de bande passante envoyée par un serveur d'accès au réseau ou une passerelle de réseau de service au serveur de fonction de règles de politique et de facturation lors de la détection que le terminal mobile est activé ou que le terminal mobile effectue un transfert intercellulaire ; et
configurer de manière dynamique (306), au moyen du serveur de fonction de règles de politique et de facturation, une politique de contrôle de bande passante pour le terminal mobile en fonction de l'ensemble de paramètres de configuration et un ensemble de politiques de contrôle de bande passante préconfigurées par un opérateur, dans lequel l'ensemble de politiques de contrôle de bande passante comprend une politique de contrôle de bande passante correspondant à l'identifiant de cellule ;
**caractérisé en ce que** le processus de configuration consiste en outre à :
envoyer, au moyen du serveur de fonction de règles de politique et de facturation, la politique de contrôle de bande passante au serveur d'accès au réseau ou à la passerelle de réseau de service ;
envoyer (307), au moyen du serveur d'accès au réseau ou de la passerelle de réseau de service, en temps réel, lors de la détermination que la politique de contrôle de bande passante configurée comprend une première sous-politique de contrôle de bande passante correspondant à un identifiant de contrôle de bande passante d'interface radio, la première sous-politique de contrôle de bande passante à un dispositif de commande de réseau radio, permettant au dispositif de commande de réseau radio de mettre en oeuvre la première sous-politique de contrôle de bande passante ; et
mettre en oeuvre (312), au moyen du serveur d'accès au réseau ou de la passerelle de réseau de service, en temps réel, lors de la détermination qu'une seconde sous-politique de contrôle de bande passante, qui a besoin d'être mise en oeuvre localement, existe dans la politique de contrôle de bande passante, la seconde sous-politique de contrôle de bande passante dans la politique de contrôle de bande passante.

2. Procédé de traitement permettant un contrôle de bande passante selon la revendication 1, dans lequel l'ensemble de paramètres de configuration comprend en outre des informations de dimensions intégrées correspondant au terminal mobile ; et les informations de dimensions intégrées comprennent une ou plusieurs informations suivantes : le type de service utilisé par le terminal mobile, le type d'utilisateur du terminal mobile, la priorité d'utilisateur du terminal mobile, le nom de point d'accès du terminal mobile, le type de porteuse du terminal mobile et le moment où le terminal mobile est activé ou lorsque le terminal effectue un transfert intercellulaire.

3. Dispositif de réseau de communication mobile, comprenant :
un module d'acquisition (10), conçu pour acquérir, lors de la détection qu'un terminal mobile est activé ou qu'un terminal mobile effectue un transfert intercellulaire, un ensemble de paramètres de configuration comprenant un identifiant de cellule d'une cellule où un terminal mobile est situé ; et
un module de configuration (11), conçu pour configurer de manière dynamique une politique de contrôle de bande passante pour le terminal mobile en fonction de l'ensemble de paramètres de configuration et un ensemble de politiques de contrôle de bande passante préconfigurées par un opérateur, dans lequel l'ensemble de politiques de contrôle de bande passante comprend une politique de contrôle de bande passante correspondant à l'identifiant de cellule ;
dans lequel l'ensemble de paramètres de configuration acquis par le module d'acquisition (10) comprend en outre des informations de dimensions intégrées correspondant au terminal mobile ; et les informations de dimensions intégrées comprennent une ou plusieurs informations suivantes : le type de service utilisé par le terminal mobile, le type d'utilisateur du terminal mobile, la priorité d'utilisateur du terminal mobile, le point d'accès du terminal mobile, le type de porteuse du terminal mobile et le moment où le terminal mobile envoie une demande d'activation de service de données ;
dans lequel le dispositif de réseau de communication mobile est un serveur d'accès au réseau ou une passerelle de réseau de service ; le module d'acquisition (10) est spécifiquement conçu pour acquérir, à partir d'une demande d'activation de service de données ou d'une demande de mise à jour d'activation de service de données envoyée par un dispositif de commande de réseau radio, l'ensemble de paramètres de configuration comprenant l'identifiant de cellule, et
**caractérisé en ce que** le dispositif de réseau de communication mobile comprend en outre :
un second module d'envoi (13), conçu pour envoyer, lors de la détermination que la politique de contrôle de bande passante comprend une première sous-politique de contrôle de bande passante correspondant à un identifiant de contrôle de bande passante d'interface radio, la première sous-politique de contrôle de bande passante au dispositif de commande de réseau radio, permettant au dispositif de commande de réseau radio de mettre en oeuvre la première sous-politique de contrôle de bande passante ; et
un module de mise en oeuvre (14), conçu pour mettre en oeuvre, lors de la détermination qu'une seconde sous-politique de contrôle de bande passante, qui a besoin d'être mise en oeuvre localement, existe dans la politique de contrôle de bande passante, la seconde sous-politique de contrôle de bande passante dans la politique de contrôle de bande passante.
